(19) **Europäisches Patentamt**

**European Patent Office**

**Office européen des brevets**

(11) **EP 1 261 654 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.⁷: **C08F 285/00**, C08L 51/04

(21) Anmeldenummer: **01909704.7**

(86) Internationale Anmeldenummer:
**PCT/EP2001/000897**

(22) Anmeldetag: **26.01.2001**

(87) Internationale Veröffentlichungsnummer:
**WO 2001/055234 (02.08.2001 Gazette 2001/31)**

(54) **VERFAHREN ZUR HERSTELLUNG SCHLAGZÄHER KUNSTSTOFFE**

METHOD FOR PRODUCING IMPACT RESISTANT PLASTICS

PROCEDE POUR PRODUIRE DES MATIERES PLASTIQUES RESISTANT AUX CHOCS

(84) Benannte Vertragsstaaten:
**AT BE CH CY DE DK ES FI FR GB GR IE IT LI LU MC NL PT SE TR**

(30) Priorität: **27.01.2000 DE 10003509**

(43) Veröffentlichungstag der Anmeldung:
**04.12.2002 Patentblatt 2002/49**

(73) Patentinhaber: **BASF AKTIENGESELLSCHAFT 67056 Ludwigshafen (DE)**

(72) Erfinder:
• **MC KEE, Graham, Edmund 67433 Neustadt (DE)**

• **GAUSEPOHL, Hermann 67112 Mutterstadt (DE)**
• **NIESSNER, Norbert 67159 Friedelsheim (DE)**

(74) Vertreter: **Isenbruck, Günter, Dr.
Isenbruck, Bösl, Hörschler, Wichmann, Huhn, Patentanwälte
Theodor-Heuss-Anlage 12
68165 Mannheim (DE)**

(56) Entgegenhaltungen:
**EP-A- 0 465 792    DE-A- 19 544 312
US-A- 5 631 323     US-A- 5 932 655**

**Beschreibung**

Die Erfindung betrifft ein Verfahren zur Herstellung schlagzäher Kunststoffe auf Basis gepfropfter vernetzter Kautschukpartikel sowie einen mit dem Verfahren erhältlichen schlagzähen Kunststoff.

Schlagzähe Kunststoffe zeigen eine erhöhte Belastungsfähigkeit gegen mechanische Einwirkungen, die sie für viele Anwendungen z. B. für Gebrauchsgegenstände, besonders geeignet macht. Diese besonderen Eigenschaften werden durch die Struktur dieser Kunststoffe erreicht, bei denen Domänen von Elastomeren, z.B. Kautschuken, in einer Matrix aus einem Thermoplasten eingebettet sind. Die Mehrphasigkeit und damit auch die Domänenstruktur derartiger schlagzäher Kunststoffe beruht auf ihrem Aufbau aus verschiedenen Polymerkomponenten, die nicht oder nur teilweise miteinander mischbar sind. Ihre Schlagzähigkeit resultiert aus einer erhöhten Energieaufnahme bei der Deformation bis zum Bruch. Die Energie wird dabei zur Bildung von Mikrohohlräumen oder zur Einleitung von Abgleitvorgängen der Matrixpolymerketten verbraucht. Die Mehrphasigkeit ist deshalb eine notwendige Voraussetzung für das Erreichen hoher Schlagzähigkeiten.

Im übrigen gilt folgendes:

Im allgemeinen bilden die beiden verschiedenen chemischen Polymerkomponenten eine Dispersion, die während der Verarbeitung nur wenig Phasenseparation zeigt und bei intensiverer Temperatureinwirkung nicht zur Homogenisierung unter Bildung einer makromolekularen Lösung neigt;
zwischen den Elastomerpartikeln und der Matrix muß eine Kopplung bestehen, das heißt an den Phasengrenzflächen müssen Kräfte übertragen werden können.

Die wirkungsvollste Kopplung an den Grenzflächen der Elastomerteilchen wird durch Pfropfcopolymerisation erreicht. Dabei wird in der Regel so verfahren, daß ein Kautschuk vorgelegt wird, auf den anschließend durch Polymerisation mit einem Monomerengemisch ein Copolymer aufgepfropft wird. Durch das Copolymer erfolgt eine Verankerung der Kautschukpartikel in der sie umgebenden Matrix.

In der US 3,957,912 wird ein Verfahren zur Herstellung eines Acrylnitril-Butadien-Styrol-Kunststoffs beschrieben. Dabei wird zunächst ein Alkyldien-Kautschuk mit Styrol- und/oder Acrylnitrilmonomeren durch Emulsionspolymerisation unter Erhalt eines gepfropften Kautschuks polymerisiert. Zu diesem Kautschuk wird anschließend Styrol und /oder Acrylnitril gegeben, sowie zumindest ein Lösungsmittel für das Styrol-Acrylnitril-Copolymere. Der Kautschuk wird in das Lösungsmittel überführt, das Wasser abgetrennt und die Mischung aus Kautschuk, Lösungsmittel und Monomer polymerisiert. Dieses Verfahren ist wegen der Überführung des Kautschuks in das Lösungsmittel aufwendig durchzuführen. Durch den hohen Gehalt an Dien-Verbindungen im Kautschuk zeigt dieser unter Einwirkung von Licht oder anderer äußerer Einflüsse, wie Hitze, Alterungserscheinungen, die zum vorzeitigen Verschleiß der Werkstücke führen können.

In der US 3,903,199 und der US 3,903,200 werden Verfahren zur Herstellung von Acrylnitril-Butadien-Styrol-Polymeren beschrieben. Dabei werden in einem Gemisch eines Monovinyliden-aromatischen Monomeren und einem Alkennitrilmonomeren Partikel eines ersten gepfropften Kautschuks dispergiert. Diese Mischung wird entweder zunächst teilpolymerisiert, dann Partikel eines zweiten gepfropften Kautschuks zugegeben und die Matrix auspolymerisiert oder es werden die Partikel des zweiten gepfropften Kautschuks direkt in die Mischung der Monomeren gegeben und die Matrix auspolymerisiert. In beiden Fällen wird ein Kunststoff mit einer bimodalen Größenverteilung der Kautschukpartikel erhalten.

Bei den beiden Verfahren werden jeweils Kautschuke verwendet, die in den Monomerengemischen der Matrix löslich sind. Auch hier werden Kautschuke mit einem hohen Dienanteil verwendet, was zu der bereits erwähnten schlechteren Beständigkeit gegen Verwitterung führt. Derartige Kunststoffe sind daher für Außenanwendungen nur mäßig geeignet.

In der DE-A 24 00 659 wird ein Verfahren zur Herstellung von schlagzähen Kunststoffen beschrieben, wobei Kautschukteilchen von Alkadien-Kautschuk, gepfropft mit monovinyliden-aromatischen Monomeren und Alkennitril-Monomeren in einer Copolymerisat-Grundmasse von monovinyliden-aromatischen Monomeren und Alkennitril-Monomeren gleichmäßig dispergiert werden. Die Vermischung der Komponenten erfolgt bei 120 - 180 ° C in Gegenwart eines organischen Lösungsmittels sowie 0 - 15 % Wasser.

Wegen der besonderen Eigenschaften von schlagzähen Kunststoffen, ihrer breiten Anwendung und ihrer daraus folgenden wirtschaftlichen Bedeutung besteht ein ständiges Bedürfnis nach neuen und verbesserten derartigen Kunststoffen.

Aufgabe der Erfindung ist es daher, ein Verfahren zur Herstellung schlagzäher Kunststoffe sowie einen nach diesem Verfahren erhältlichen schlagzähen Kunststoff zur Verfügung zu stellen.

Diese Aufgabe wird mit einem Verfahren zur Herstellung schlagzähen Kunststoffs auf Basis gepfropfter vernetzter Kautschukpartikel gelöst, wobei

(a) Partikel eines vernetzten Kautschuks aus einem ersten Monomerengemisch erzeugt werden, das einen Anteil an Dien-Verbindungen < 50 Gew.-%, vorzugsweise < 5 Gew.-%, insbesondere bevorzugt < 2 Gew.-% aufweist,

(b) die Partikel des vernetzten Kautschuks mit einem zweiten Monomeren oder Monomerengemisch unter Ausbildung einer Pfropfhülle gepfropft werden,

(c) die Partikel des gepfropften vernetzten Kautschuks zu einem dritten Monomerengemisch gegeben werden, und

(d) die Monomeren des dritten Monomerengemisches unter Ausbildung einer Matrix polymerisiert werden.

Das Verfahren ist sehr einfach durchzuführen, da beispielsweise eine Abtrennung der Wasserphase bei einer Herstellung der Kautschukpartikel durch Emulsionspolymerisation nicht erforderlich ist. Durch die in einem separaten Reaktionsschritt durchgeführte Ausbildung der Pfropfhülle können die Eigenschaften des schlagzähen Kunststoffs in einem weiteren Bereich modifiziert werden. Durch die intensive Verbindung zwischen den Kautschukpartikeln und der sie umgebenden Matrix werden schlagzähe Kunststoffe mit einem sehr hohen Energieaufnahmepotential erhalten. Durch die Pfropfhülle kann eine bessere Verträglichkeit und damit auch eine verbesserte Verbindung zwischen Kautschukteilchen und umgebender Matrix erreicht werden, wodurch sich auch die mechanischen Eigenschaften, d. h. die Energieaufnahme bis zum Bruch verbessert. Durch den niedrigen Anteil an Dien-Verbindungen im ersten Monomerengemisch verbessert sich die Alterungsbeständigkeit der Kautschukpartikel und damit auch des schlag-zähen Kunststoffs. Um eine ausreichende Elastizität der Kautschukpartikel zu gewährleisten, ist bevorzugt, daß die Kautschukpartikel eine Glasübergangstemperatur $T_g < 0°C$, vorzugsweise $T_g < -10°C$, insbesondere bevorzugt $T_g < -20°C$ aufweisen. Im ersten Schritt (a) des Verfahrens wird ein Kautschuk in Partikelform erzeugt, auf den im zweiten Schritt (b) die zweiten Monomeren bzw. das zweite Monomerengemisch aufgepfropft werden. Dadurch kann eine wirkungsvolle Phasenkopplung an den Grenzflächen zwischen den Elastomerteilchen und der im dritten Schritt (c) aus einem dritten Monomerengemisch erzeugten Polymermatrix erreicht werden. Es ist nicht erforderlich, daß die Dispersion der gepfropften vernetzten Kautschukpartikel stabil ist. In vielen Fällen tritt durch die Quellung der gepfropften Kautschukpartikel im dritten Monomerengemisch eine Gelbildung ein. Bei der Polymerisation des dritten Monomerengemisches im Schritt (d) tritt eine Phasenseparation auf, so daß das Produkt fließfähig wird.

Für die Herstellung des Kautschuks geeignete Monomere sind beispielsweise Ester der (Meth)acrylsäure mit $C_1$-$C_{30}$-Alkoholen, insbesondere n-Butylacrylat und Ethylhexylacrylat. Isopren, 2-Chlor-1,3-butadien, 1-Chlor-1,3-butadien sowie andere substituierte Butadiene und Isoprene. Die Kautschukdispersion kann z. B. mit der Emulsions-, Miniemulsions- und Mikrosuspensionsfahrweise hergestellt werden. Die Ausbildung der Pfropfhülle erfolgt vorzugsweise ebenfalls in Dispersion. Die Verfahren sind dem Fachmann an sich bekannt.

Die Zugabe der Dispersion der gepfropften Kautschukpartikel zum dritten Monomerengemisch im Schritt (c) kann auf verschiedene Weise erfolgen. Der gepfropfte Kautschuk kann direkt als wäßrige Dispersion zugegeben werden, es ist jedoch auch möglich, das Wasser abzutrennen und die Kautschukpartikel mit einem Wassergehalt von < 5 Gew.-% zu dem dritten Monomerengemisch zu geben. Die Kautschukpartikel können zunächst auch coaguliert werden und nach teilweise Abtrennung des Wassers mit einem Wassergehalt von 5-60 Gew.-% zum dritten Monomerengemisch gegeben werden. Die Abtrennung des Wassers von den gepfropften Kautschukpartikeln kann beispielsweise durch Druckfiltration, Zentrifugation oder Abziehen des Wassers unter vermindertem Druck erfolgen. Geeignet kann das Wasser beispielsweise während der Polymerisation des dritten Monomerengemischs abdestilliert werden. Selbstverständlich ist es auch möglich, die gepfropften Kautschukpartikel nach Zugabe der wäßrigen Dispersion zum dritten Monomerengemisch zu agglomerieren oder zu coagulieren. Vorteilhaft wird die Mischung aus drittem Monomerengemisch und gepfropften Kautschukpartikeln, die gegebenenfalls als Dispersion vorliegen, durch intensive Bewegung homogenisiert. Dies kann beispielsweise unter Verwendung eines Rotor-Stator-Systems erfolgen, wobei der Rotor mit hoher Geschwindigkeit, das heißt mehr als 500 Upm rotiert wird. Zur Stabilisierung der Dispersion der Kautschukpartikel und der Monomeren des dritten Monomerengemisches in Wasser wird vorteilhaft ein Schutzkolloid zugegeben. Die Zugabe der gepfropften Kautschukpartikel zum dritten Monomerengemisch kann auch in der Weise gestaltet werden, daß zunächst nur ein Teil des dritten Monomerengemisches vorgelegt wird, dann die Dispersion der gepfropften Kautschukpartikel zugegeben und das Wasser entfernt wird, worauf der restliche Anteil des dritten Monomerengemisches zugegeben wird. Dies ist insbesondere dann von Vorteil, wenn das dritte Monomerengemisch Monomere enthält, die leicht mit dem Wasser abgetrennt werden. In diesem Fall werden zunächst die schwerer flüchtigen Monomeren des dritten Monomerengemisches vorgelegt, die wäßrige Dispersion der gepfropften Kautschukpartikel zugegeben und das Wasser abgezogen, worauf anschließend die leichter flüchtigen Monomeren des dritten Monomerengemisches zugegeben werden, ehe das dritte Monomerengemisch durch Zugabe eines Radikalstarters polymerisiert wird. Die gepfropften Kautschukpartikel können im dritten Monomerengemisch für eine bestimmte Zeit, vorzugsweise mehr als fünf Minuten, gequollen werden, ehe die Polymerisation des dritten Monomerengemisches im Schritt (d) gestartet wird. Die Polymerisation des dritten Monomerengemisches kann in einem Reaktionschritt durchgeführt werden, wobei anschließend noch vorhandenes Lösungsmittel oder Monomere durch Einblasen von Stickstoff entfernt werden. Es kann jedoch auch verfahrenstechnisch günstiger sein, daß die Polymerisation des dritten Monomerengemisches in einer Kaskade von Kesseln oder Türmen durchgeführt wird. Dies kann beispielsweise sinnvoll sein, wenn die Viskosität der Reaktionsmischung zu stark ansteigt. So kann die Polymerisation des dritten Monomerengemisches zunächst in Masse begonnen werden und zu einem späteren Zeitpunkt nach Wasserzugabe in Suspension fortgeführt werden. Gemäß einer vorteilhaften Ausführungsform wird die Reaktionsmischung in eine Suspension überführt, bevor mehr als 15 % der Monomeren des dritten Monomerengemisches polymerisiert sind.

Das Gewichtsverhältnis von Pfropfhülle zu vernetztem Kautschukpartikel der gepfropften vernetzten Kautschukpartikel wird vorteilhaft zwischen 5 : 95 und 80 : 20, vorzugsweise 5 : 95 und 60 : 40, insbesondere 5 : 95 und 40 : 60 gewählt.

Die Partikelgröße der gepfropften vernetzten Kautschukpartikel ist vorteilhaft < 10 µm, vorzugsweise < 5 µm, insbesondere bevorzugt < 4 µm.

Das zweite Monomere oder das zweite Monomerengemisch enthält vorzugsweise zumindest ein Monomeres, das ausgewählt ist aus der Gruppe, die gebildet wird von Styrol, Acrylnitril und Methylmethacrylat.

Das dritte Monomerengemisch enthält vorzugsweise zumindest ein Monomeres, das ausgewählt ist aus der Gruppe, die gebildet wird von Styrol, Acrylnitril und Methylmethacrylat.

Das dritte Monomerengemisch kann bei einer besonderen Ausführungsform des Verfahrens auch mindestens ein weiteres Polymer enthalten, daß vorzugsweise verträglich oder teilverträglich ist mit dem aus dem dritten Monomerengemisch erhaltenen Polymer. Unter Verträglichkeit wird dabei verstanden, daß keine Phasentrennung zwischen dem mindestens einen weiteren Polymeren und dem aus dem dritten Monomerengemisch erhaltenen Polymeren auftritt. Das weitere Polymere kann beispielsweise erzeugt werden, indem das dritte Monomerengemisch teilweise polymerisiert wird, dann zum teilweise polymerisierten Monomerengemisch die Dispersion der gepfropften Kautschukpartikel gegeben wird und anschließend die Polymerisation des dritten Monomerengemisches vervollständigt wird.

Die gepfropften vernetzten Kautschukpartikeln weisen vorzugsweise einen Quellindex zwischen 2 und 100, vorzugsweise zwischen 3 und 70 , insbesondere zwischen 3 und 60 auf. Der Quellindex wird in folgender Weise bestimmt:.

Mit der Dispersion der gepfropften vemetzten Kautschukpartikel wird ein Film gegossen und das Wasser bei 23°C abgedampft. Anschließend wird der Film bei 50°C und vermindertem Druck getrocknet. Ca. 0,5 g des Films werden in einem Lösungsmittel wie Tetrahydrofuran oder Dimethylformamid für 24 Stunden gequollen. Danach wird das Polymergel von dem nicht in das Gel eingebundenen Lösungsmittel durch Zentrifugieren getrennt. Das Gel wird gewogen, dann getrocknet und erneut gewogen. Der Quellungsindex (QI) wird nach folgender Gleichung berechnet:

$$QI = \frac{\text{Gewicht des gequollenen Polymergels}}{\text{Gewicht des getrockneten Polymergels}}$$

Die Kautschukpartikel können einen harten Kern aus einem Copolymer aufweisen, das vorzugsweise eine Glasübergangstemperatur von Tg > 0 ° C, besonders bevorzugt Tg > 10 ° C, insbesondere bevorzugt Tg > 20 ° C aufweist. Dieser harte Kern kann beispielsweise aus Polystyrol bestehen.

Bevorzugt weist der harte Kern einen Brechungsindex von > 1,53, vorzugsweise > 1,56, insbesondere > 1,57 auf. Schlagzähe Kunststoffe, die kleine Kautschukpartikel enthalten, sind meist opak. Sie lassen sich dadurch nur sehr schwierig einfärben. Durch den harten Kern kann der Brechungsindex der Kautschukpartikel an die umgebende Polymermatrix angeglichen werden, wodurch die Lichtstreuung verringert wird. Dieser Ausgleich wird besonders gut mit einem harten Kern erreicht, der Styrol oder ein Styrolderivat enthält. Diese Polymeren zeigen einen besonders hohen Brechungsindex.

Der mit dem erfindungsgemäßen Verfahren erhaltene schlagzähe Kunststoff zeigt eine hohe mechanische Belastbarkeit. Er kann auch im Gemisch mit wenigstens einem zusätzlichen polymeren Kunststoff vorliegen. Als zusätzlicher Polymerkunststoff eignen sich Polycarbonate, Polyester, Polyamide, Polyalkylmethacrylate, worunter Homo- wie auch Copolymerisate zu verstehen sind, sowie auch hochtemperaturbeständige Poly(ether)sulfone. Weitere geeignete Polymere sind Polypropylen, Polyethylen, Polytetrafluorethylen (PTFE) und Polystyrol-acrylnitril. Bevorzugt werden Polyphenylenether (PPE), syndiotaktisches Polystyrol, Styrol-Diphenylethylen-Copolymere, sowie Copolymere mit einem Styrolanteil von mehr als 65 Gew.-%. Copolymere mit einem Anteil von mehr als 80 Gew.-% Styrol sind bevorzugt, wenn das die Matrix bildende Polymer Polystyrol oder ein Copolymer des Styrols mit einem Anteil des Comonomers von weniger als 10 Gew.-% ist. Polycarbonate, Polyester, Styrol-Acrylnitrilcopolymere und Styrol-Acrylnitril-Methylmethacrylat-Copolymere sind besonders bevorzugt, wenn das die Matrix bildende Polymere ein Polystyrol-Acrylnitril-Copolymer oder ein Styrol-Acrylnitril-Methylmethacrylat-Copolymer ist.

**Patentansprüche**

1.  Verfahren zur Herstellung eines schlagzähen Kunststoffs auf Basis gepfropfter vernetzter Kautschukpartikel, wobei

(a) Partikel eines vernetzten Kautschuks aus einem ersten Monomerengemisch erzeugt werden, das einen Anteil an Dien-Verbindungen von < 50 Gew.-%, aufweist,

(b) die Partikel des vernetzten Kautschuks mit einem zweiten Monomeren oder Monomerengemisch unter Ausbildung einer Pfropfhülle gepfropft werden,

(c) die Partikel des gepfropften vernetzten Kautschuks zu einem dritten Monomerengemisch gegeben werden, und

(d) die Monomeren des dritten Monomerengemisches unter Ausbildung einer Matrix polymerisiert werden.

2. Verfahren nach Anspruch 1, wobei das Gewichtsverhältnis von Pfropfhülle zum vernetzten Kautschukpartikel der gepfropften vernetzten Kautschukpartikel zwischen 5 : 95 und 80 : 20, vorzugsweise 5 : 95 und 60 : 40, insbesondere 5 : 95 und 40 : 60, liegt.

3. Verfahren nach einem der Ansprüche 1 oder 2, wobei die Partikelgröße der gepfropften vernetzten Kautschukpartikel < 10 μm, vorzugsweise < 5μm, insbesondere bevorzugt < 4 μm ist.

4. Verfahren nach einem der Ansprüche 1 bis 3, wobei das zweite Monomere oder das zweiten Monomerengemisch und/oder das dritte Monomerengemisch zumindest ein Monomeres enthält, das ausgewählt ist aus der Gruppe, die gebildet wird von Styrol, Acrylnitril und Methylmethacrylat.

5. Verfahren nach einem der Ansprüche 1 bis 4, wobei das dritte Monomerengemisch ein weiteres Polymeres enthält, das vorzugsweise mit dem aus dem dritten Monomerengemisch gebildeten Polymeren verträglich ist, insbesondere aus den gleichen Monomeren aufgebaut ist wie die Monomeren des dritten Monomerengemisches.

6. Verfahren nach einem der Ansprüche 1 bis 5, wobei die gepfropften vernetzten Kautschukpartikel einen Quellindex zwischen 2 und 100, vorzugsweise zwischen 3 und 70, insbesondere zwischen 3 und 60 aufweisen.

7. Verfahren nach einem der Ansprüche 1 bis 6, wobei die gepfropften vernetzten Kautschukpartikel einen harten Kern aus einem (Co)polymer enthalten, das eine Glasübergangstemperatur Tg von > 0° C, vorzugsweise > 10 ° C, insbesondere bevorzugt > 20° C aufweist.

8. Schlagzäher Kunststoff auf Basis gepfropfter vernetzter Kautschukpartikel, erhältlich gemäß einem Verfahren nach einem der Ansprüche 1 bis 7.

9. Schlagzäher Kunststoff nach Anspruch 8, wobei der schlagzähe Kunststoff im Gemisch mit wenigstens einem weiteren polymeren Kunststoff vorliegt.

10. Schlagzäher Kunststoff nach Anspruch 9, wobei der wenigstens eine weitere polymere Kunststoff ausgewählt ist aus der Gruppe, die gebildet wird von Polyphenylether, syndiotaktischem Polystyrol, Styrol-Diphenylethylen-Copolymeren, Copolymeren mit einem Styrolanteil > 80 Gew.-%, Polycarbonaten, Polyestern, Styrol-Acrylnitril-Copolymeren und Styrol-Acrylnitril-Methylmethacrylat-Copolymeren.

**Claims**

1. A process for preparing an impact-modified rubber based on grafted crosslinked rubber particles, where

(a) particles of a crosslinked rubber made from a first monomer mixture are produced and have a content of <50% by weight of diene compounds,

(b) the particles of the crosslinked rubber are grafted with a second monomer or monomer mixture, with formation of a graft shell,

(c) the particles of the grafted crosslinked rubber are added to a third monomer mixture, and

(d) the monomers of the third monomer mixture are polymerized with formation of a matrix.

2. A process as claimed in claim 1, where the ratio by weight of graft shell to the crosslinked rubber particle in the grafted crosslinked rubber particles is from 5:95 to 80:20, preferably from 5:95 to 60:40, particularly from 5:95 to 40:60.

3. A process as claimed in claim 1 or 2, where the size of the grafted crosslinked rubber particles is <10 μm, preferably <5 μm, particularly preferably <4 μm.

4. A process as claimed in any of claims 1 to 3, where the second monomer or the second monomer mixture and/or the third monomer mixture comprise or comprises at least one monomer selected from the group consisting of styrene, acrylonitrile and methyl methacrylate.

5. A process as claimed in any of claims 1 to 4, where the third monomer mixture comprises another polymer preferably compatible with the polymer formed from the third monomer mixture, and particularly built up from monomers which are the same as those of the third monomer mixture.

6. A process as claimed in any of claims 1 to 5, where the grafted crosslinked rubber particles have a swelling index of from 2 to 100, preferably from 3 to 70, particularly from 3 to 60.

7. A process as claimed in any of claims 1 to 6, where the grafted crosslinked rubber particles comprise a hard core made from a (co)polymer which has a glass transition temperature Tg >0°C, preferably >10°C, particularly preferably >20°C.

8. An impact-modified plastic based on grafted crosslinked rubber particles, obtainable by a process as claimed in any of claims 1 to 7.

9. An impact-modified plastic as claimed in claim 8, where the impact-modified plastic is present in a mixture with at least one other plastic.

10. An impact-modified plastic as claimed in claim 9, where the at least one other plastic has been selected from the group consisting of polyphenyl ether, syndiotactic polystyrene, styrene-diphenylethylene copolymers, copolymers with a styrene content >80% by weight, polycarbonates, polyesters, styrene-acrylonitrile copolymers and styrene-acrylonitrile-methyl methacrylate copolymers.

## Revendications

1. Procédé de préparation d'une substance synthétique résistant aux chocs à base de particules de caoutchouc réticulé, greffées, dans lequel

    (a) des particules d'un caoutchouc réticulé sont produites à partir d'un premier mélange de monomères, qui présente une fraction en composés diène de <50% en poids,
    (b) les particules du caoutchouc réticulé sont greffées avec un deuxième monomère ou mélange de monomères avec réalisation d'une enveloppe de greffage,
    (c) les particules du caoutchouc réticulé, greffées, sont versées dans un troisième mélange de monomères, et
    (d) les monomères du troisième mélange de monomères sont polymérisés avec formation d'une matrice.

2. Procédé suivant la revendication 1, dans lequel le rapport pondéral entre l'enveloppe de greffage et les particules de caoutchouc réticulé des particules de caoutchouc réticulé, greffées, est compris entre 5/95 et 80/20, de préférence 5/95 et 60/40, en particulier 5/95 et 40/60.

3. Procédé suivant l'une des revendications 1 et 2, **caractérisé en ce que** la taille des particules de caoutchouc réticulé, greffées, est <10 μm, de préférence <5 μm, en particulier avantageusement <4 μm.

4. Procédé suivant l'une des revendications 1 à 3, dans lequel le deuxième monomère ou le deuxième mélange de monomères et/ou le troisième mélange de monomères contient au moins un monomère qui est choisi parmi le groupe formé du styrène, de l'acrylonitrile et du méthacrylate de méthyle.

5. Procédé suivant l'une des revendications 1 à 4, dans lequel le troisième mélange de monomères contient un autre polymère qui, de préférence, est compatible avec le polymère formé du troisième mélange de monomères, en particulier est constitué des mêmes monomères que les monomères du troisième mélange de monomères.

6. Procédé suivant l'une des revendications 1 à 5, dans lequel les particules de caoutchouc réticulé, greffées, présentent un indice de gonflement compris entre 2 et 100, de préférence entre 3 et 70, en particulier entre 3 et 60.

7. Procédé suivant l'une des revendications 1 à 6, dans lequel les particules de caoutchouc réticulé, greffées, contiennent un noyau dur à base d'un (co)polymère qui présente une température de transition vitreuse Tg >0°C, de préférence >10°C, particulièrement avantageusement >20°C.

8. Substance synthétique résistant aux chocs à base de particules de caoutchouc réticulé, greffées, que l'on peut obtenir suivant un procédé selon l'une des revendications 1 à 7.

9. Substance synthétique résistant aux chocs suivant la revendication 8, dans laquelle la substance synthétique résistant aux chocs se présente en mélange avec au moins une autre substance synthétique polymère.

10. Substance synthétique résistant aux chocs suivant la revendication 9, dans laquelle ladite au moins une autre substance synthétique polymère est choisie parmi le groupe formé d'éther polyphénylique, de polystyrène syndiotactique, de copolymères de styrène-diphényléthylène, de copolymères comportant une fraction de styrène >80% en poids, de polycarbonates, de polyesters, de copolymères de styrène-acrylonitrile et de copolymères de styrène-

**EP 1 261 654 B1**

acrylonitrile-méthacrylate de méthyle.